# EUROPÄISCHE PATENTSCHRIFT

(11) **EP 1 540 294 B1**
(45) Veröffentlichungstag und Bekanntmachung des Hinweises auf die Patenterteilung: **28.12.2005**
(21) Anmeldenummer: 03753312.2
(22) Anmeldetag: 17.09.2003
(51) Int. Cl.: G01L 21/34, H01J 41/06

(54) **KALTKATODEN - IONISATIONSMANOMETER MIT HOHER STANDZEIT DURCH ZWEI GETRENNTE KATODEN**
COLD-CATHODE IONISATION MANOMETER HAVING A LONGER SERVICE LIFE DUE TO TWO SEPARATE CATHODES
MANOMETRE A IONISATION A CATHODE FROIDE AYANT UNE DUREE DE VIE ELEVEE GRACE A DEUX CATHODES SEPAREES

(30) Priorität: 19.09.2002 DE 10243634
(43) Veröffentlichungstag der Anmeldung: 15.06.2005
(73) Patentinhaber: Otto-Von-Guericke-Universität Magdeburg, 39106 Magdeburg (DE)
(72) Erfinder: EDELMANN, Christian, 09599 Freiberg (DE); WILFERT, Stefan, 39120 Magdeburg (DE)
(86) Internationale Anmeldenummer: PCT/DE2003/003107
(87) Internationale Veröffentlichungsnummer: WO 2004/029572

(56) Entgegenhaltungen:
- GB-A- 1 535 314
- US-A- 3 382 389
- US-A- 4 047 102

## Beschreibung

Die Erfindung betrifft ein Kaltkatoden-lonisationsmanometer zur Druckmessung im Vakuum, das nach dem inversen Magnetron-Prinzip arbeitet und zur Erfassung von Drücken im Fein-, Hoch- und Ultrahochvakuumbereich (vorzugsweise zwischen 10⁻⁷ Pa und 1 Pa) eingesetzt wird. Bei diesem lonisationsmanometertyp wird mittels einer Hochspannung zwischen zwei geeignet im Messröhrengehäuse angeordneten ungeheizten Elektroden - der Anode und der Katode - eine selbstständige kalte Gasentladung gezündet, die durch ein zusätzliches Magnetfeld hinreichend hoher Feldstärke bis zu kleinsten Drücken hin aufrechterhalten wird. Der dabei fließende Entladungsstrom ist über einen sehr weiten Vakuumbereich druckabhängig und dient (gewöhnlich) als Maß für den Druck. Bekannte und heutzutage kommerziell genutzte Kaltkatoden-Ionisationsmanometer-Konstruktionen sind die von Penning vorgeschlagenen Elektrodenkonfigurationen und die von Redhead entwickelte Magnetron-und inverse Magnetron-Röhrenstruktur. Diese Manometertypen werden im Buch von Chr. Edelmann "*Vakuumphysik",* Spektrum Akad. Verl. Berlin, (1998) ausführlich beschrieben.

Kaltkatoden-lonisationsmanometer zeichnen sich neben ihrem weiten Messbereich nicht nur durch ihren relativ einfachen Aufbau aus, sie sind zudem sehr robust, unempfindlich gegen Lufteinbrüche und Erschütterungen und relativ kostengünstig. Neben den zahlreichen Vorteilen, die der Gebrauch dieser Manometer auch mit sich bringt, weisen diese Messgeräte dennoch einen entscheidenden Nachteil auf, der ihre Einsatzfähigkeit zumindest zeitlich erheblich einschränkt, Mit zunehmender Betriebszeit nimmt ihre Messgenauigkeit infolge von Kontaminationserscheinungen ihrer Messzellen stetig ab. Diese Kontaminationserscheinungen werden durch die in den Kaltkatoden-Ionisationsmanometem ablaufenden Gasentladungen selbst verursacht. Da mit zunehmendem Druck die Ladungsträgerkonzentration in den Messzellen größer wird und somit auch immer größere Entladungsströme erzeugt werden, werden im Hoch- und insbesondere im Feinvakuumbereich immer mehr lonen durch die hohen elektrischen Felder in Richtung Katode stark beschleunigt, so dass sie beim Aufprall auf deren Oberfläche Katodenmaterial zerstäuben. Dieses abgesputterte Katodenmaterial schlägt sich auf Wandungen und auf elektrischen Isolierstrecken in der Messröhre nieder und kann dort leitfähige Schichten bilden. Bei anliegender Betriebsspannung kann dies zu druckunabhängigen Kriechströmen führen, die sich dem eigentlichen Entladungsstrom überlagem und somit den unteren Messbereich des Manometers erheblich einschränken. Infolge der beschriebenen Katodenzerstäubung ist die Lebensdauer der Katode begrenzt. Da als Katodenmaterial meist Edelstahl verwendet wird, können darüber hinaus sich lösende Teile der entstandenen Kontaminationsschichten im Magnetfeld ausrichten und Kurzschlüsse verursachen. Hinzu kommt, dass im Druckbereich oberhalb von 10⁻² Pa in den Gasentladungsstrecken der Messröhren kohlenwasserstoffhaltige Dämpfe (Öldämpfe, etc.) durch Wechselwirkung mit den hochenergetischen Ladungsträgem im Plasma gekrackt oder polymerisiert werden können. Die bei diesen plasma-chemischen Reaktionen gebildeten Krackprodukte (meist Kohlenstoffschichten) können sich ebenso auf Elektrodenoberflächen absetzen und dort wieder Oberflächenschichten bilden, die deren Sekundärelektronenausbeute nachteilig beeinflussen und zu Kennlinienverschiebungen oder zu einer instabilen Druckanzeige führen können. Im ungünstigsten Fall ist sogar das Verlöschen der Entladung und damit der Ausfall der Messröhre möglich.

Da die Einsatzdauer dieser Messgeräte durch die oben beschriebenen Störeffekte beschränkt ist, sind heutzutage alle üblichen kommerziellen Kaltkatoden-Ionisationsmanometer so aufgebaut, dass sie relativ einfach demontiert werden können, um die verschmutzten bzw. kontaminierten Elektroden reinigen oder durch neue ersetzen zu können. Damit wird der Tatsache Rechnung getragen, dass durch die Beseitigung von Kontaminationsschichten in der Messröhre der anfängliche Betriebszustand und somit die Leistungsfähigkeit der Messröhre selbst nach längerem Gebrauch vollständig wiederhergestellt werden kann. Um jedoch die volle Leistungsfähigkeit dieser Vakuummeter dauerhaft garantieren zu können, ist daher eine regelmäßige Kalibrierung der Messröhren bzw. deren Reinigung erforderlich, was stets mit einem erhöhten Wartungs- und Kostenaufwand verbunden ist.

Obwohl der Kontaminationseffekt dieser Messröhren und deren Folgen schon seit ihrer Etablierung in der Vakuummesstechnik bekannt ist, gibt bzw. gab es zu dieser Problematik nur wenig bzw. kaum erfolgsversprechende Ansätze zu dessen Reduzierung. So ist aus der Patentschrift DE 197 17 263 ein Penning-Manometer bekannt, dessen Katode zumindest überwiegend aus Titan besteht. Infolge der geringen Sputterausbeute von Titan dürfte die Zerstäubung des Katodenwerkstoffes stark verlangsamt ablaufen, wodurch die Standzeit der Katode wesentlich verlängert werden sollte. Kritisch muss jedoch dabei betrachtet werden, dass gerade Titan z. B. als Katodenwerkstoff in (Ti-)Zerstäuberpumpen aufgrund seiner Eigenschaft, aktive Gase gut chemisorbieren zu können, eingesetzt wird und somit erwartet werden muss, dass die mit Ti-Katoden ausgestattete Penning-Röhre eine weitaus höhere Pumpwirkung aufweist als Kaltkatoden-Messröhren mit üblichen Katodenmaterial. Dementsprechend ist mit einem größeren Fehler in der Druckanzeige zu rechnen.

Eine frühere Patentschrift GB 555 134 basiert auf den Grundgedanken, die Betriebsspannung der Messröhre mithilfe einer elektronischen Regelschaltung automatisch zu reduzieren, wenn der Entladungsstrom bei einem bestimmten Druck im oberen Vakuumbereich einen vorgegebenen Grenzwert erreicht hat. Wird der Druck weiter erhöht, so wird die Anodenspannung elektronisch derart abgesenkt, dass der Entladungsstrom konstant bleibt, und die nachgeregelte Anodenspannung nun als Maß für den Druck dient. Diese Methode wurde ursprünglich als Methode zur Messbereichserweiterung von Kaltkatoden-Ionisationsmanometern zu höheren Drücken hin vorgeschlagen. Sie dürfte jedoch ebenso zur Reduzierung des Kontaminationseffektes im oberen Druckbereich beitragen, da infolge der Absenkung der Betriebsspannung auch die elektrischen Feldstärken reduziert werden, weshalb die Ionen mit verminderter Energie auf die Katodenoberfläche auftreffen. Außerdem werden durch das Absenken der Betriebsspannung die Entladungsströme kleiner. Durch beide Effekte, Absenken der Entladungsspannung und Reduzierung des Entladungsstromes, wird die Kontaminationsrate verringert. Eine ähnliche, aber wesentlich einfachere Methode basiert auf Untersuchungen von Conn und Daglish ("The influence of the ballast resistance on the performance of Penning vacuum gauges" (J. Sci. Instr. 31 (1954); 433 - 434), die zur Begrenzung des Entladungsstroms bei hohen Drücken einen hochohmigen Widerstand zwischen der Anode der Messröhre und dem Hochspannungsgerät einfügten. Durch diesen so genannten Ballastwiderstand sinkt mit wachsendem Druck (und damit mit wachsendem Entladungsstrom) die an der Anode liegende Betriebsspannung, so dass der Entladungsstrom bei hinreichend hohen Drücken begrenzt wird.

Einer anderen Patentschrift US 4 000 457 zufolge kann eine rasche Röhrenverschmutzung vermieden werden, wenn die Messröhre im oberen Vakuumbereich mit einer in Abhängigkeit vom Druck gepulsten Gleichspannung angesteuert wird. Während im Ultrahoch- und Hochvakuumbereich die Kaltkatoden-Messröhre wie üblich mit einer Gleichspannung betrieben wird, wird in Abhängigkeit vom mit zunehmendem Druck größer werdenden Entladungsstrom die Betriebsspannung mit einer sinusförmigen Wechselspannung überlagert. Dabei wird im oberen Druckbereich die Gleichspannungskomponente so weit abgesenkt, dass die Entladung bei hohen Drücken nur noch sinusförmig gepulst wird. Infolge dieser gepulsten Messröhrenansteuerung wird die Kontaminationsanfälligkeit von Kaltkatoden-Messröhren retardierend beeinflusst, weshalb deutlich längere Standzeiten derselben zu erwarten sind.

Der vorliegenden Erfindung liegt die Aufgabe zugrunde, mittels einer verbesserten Kaltkatoden-Messröhrenkonfiguration und durch einen geeigneten Messbetrieb die Kontaminationsrate von Kaltkatoden-lonisationsmanometem von vornherein geringzuhalten, um dadurch wesentlich längere Standzeiten dieser Messröhren gewährleisten zu können.

Erfindungsgemäß wird diese Aufgabe durch die Merkmale des Anspruchs 1 gelöst. Das erfindungsgemäße Kaltkatoden-lonisationsmanometer ähnelt in seiner Grundstruktur einem klassischem inversen Magnetron, welches jedoch im Gegensatz zu den bisher üblichen mit zwei in Reihe hintereinander angeordneten und elektrisch getrennten, trommel- oder dosenähnlich ausgebildeten Katoden ausgestattet ist. Die stabförmige Anode ist in der Symmetrieachse der beiden Katoden angeordnet und verläuft durch Öffnungen in den Stirnflächen der Katoden. Durch eine separate Spannungszuführung zu den beiden Katoden wird erreicht, dass zwischen den Katoden und ihrer gemeinsamen Anode zwei voneinander unabhängige Gasentladungen gezündet werden: eine am Messröhreneingang brennende und eine durch diese Entladung abgeschirmte zweite "innere" Entladung. Mindestens eine Öffnung in mindestens einer der einander zugewandten Stirnflächen der beiden Katoden ist so dimensioniert, dass sie einen Strömungswiderstand für kontaminierende Gase bildet.

Derartige Doppelplasma-Anordnungen in Kaltkatoden-lonisationsmanometem sind zwar bereits aus verschiedenen früheren Patentschriften (z. B. DE 1 648 689 oder US 5 568 053) bekannt, jedoch wurden bei diesen die Doppelentladungsstrecken stets nur in einer gemeinsamen Messkammer (durch separate Magnetfeldkonfigurationen) zum Zwecke der Vermeidung von durch Entladungsinstabilitäten verursachten Druckanzeigeschwankungen oder zur Erhöhung des Entladungsstroms genutzt.

In dem erfindungsgemäßen Kaltkatoden-Ionisationsmanometer haben die beiden separat angesteuerten Entladungskammern unterschiedliche Funktionen: Die Entladung, die im Bereich der der Messöffnung benachbarten ersten Katode brennt, besitzt die Funktion einer Gasreinigungsvorrichtung, in der über plasma-chemische Dissoziationsreaktionen eintretende Kohlenwasserstoff- oder andere kontaminierende Dämpfe gekrackt bzw. polymerisiert werden (dieses Entladungsgebiet wirkt als so genanntes lonenbaffle).

Die Entladungskammer im Bereich der zweiten Katode, die hinter der der Messöffnung benachbarten ersten Katode angeordnet ist, fungiert als eigentliche Messkammer. Nur der aus dieser zweiten Entladungszone abfließende Entladungsstrom wird ausgewertet und zur Druckmessung herangezogen. Diese spezielle Doppelplasma-Konfiguration hat folgenden erfindungswesentlichen Vorteil: Das Plasma, das im Bereich der ersten Katode und damit näher zu der sich an die Messöffnung anschließenden Vakuumkammer brennt, schützt das innere Plasma, das im Bereich der zweiten Katode brennt und die eigentliche Messstelle darstellt, weitestgehend vor störenden Kontaminationen durch kondensierbare Dämpfe. Dies verhindert insbesondere Ablagerungen von unerwünschten Kohlenstoffschichten im zur eigentlichen Messung benutzten Entladungsraum, wodurch nicht nur eine Kennlinienverschiebung infolge verschmutzter Elektroden vermieden, sondern auch eine deutliche Reduzierung der Kontaminationsrate und somit eine wesentlich längere Lebensdauer der Messröhre erzielt wird. Dieser vorteilhafte Effekt wird unterstützt, indem die mindestens eine Öffnung in mindestens einer der einander zugewandten Stirnflächen der Katoden so dimensioniert ist, dass sie einen vorgebbaren Strömungswiderstand für kontaminierende Gase bildet.

Vorteilhafte Weiterbildungen der Erfindung ergeben sich unmittelbar aus den Unteransprüchen.
Um die Effizienz der Katodenzerstäubung als weitere Hauptursache der Kontamination der Messröhre zu reduzieren, ist in einer besonders vorteilhaften Ausführungsform der Erfindung die Anodenspannung bei Drücken von mehr als ca. 10⁻² Pa eine sinus- oder rechteckförmige Wechselspannung, deren Frequenz entsprechend den geometrischen Parametem der Messröhre und den Betriebsparametern optimiert wird. Während die die Messröhre im gesamten unteren Vakuumbereich (< 10⁻² Pa) mit einer konstanten positiven Anodenspannung *U*_{*A*} betrieben wird, wird sie vorteilhafterweise bei Drücken oberhalb von etwa 10⁻² Pa mit einer sinus- oder rechteckförmigen Wechselspannung *U*_{*A*} konstanter Frequenz und konstanter Amplitude betrieben. Dadurch wird erreicht, dass nur noch in der ersten Halbperiode, in der die Anode also positiv gegenüber den Katoden ist, die lonen auf die Katoden treffen, während in der zweiten Halbperiode, wenn die Anode negativ bezüglich der Katoden ist, die lonen in Richtung Anode beschleunigt werden und sie dadurch effektiv reinigen können. Neben dem dadurch erzielten "Selbstreinigungseffekt" wird außerdem auch die Effizienz der gerade bei höheren Vakuumdrücken maßgeblich am Kontaminationsprozess der Messröhre beteiligten Katodenzerstäubung drastisch reduziert.

Im Folgenden ist die Erfindung anhand eines bevorzugten Ausführungsbeispiels unter Bezugnahme auf die beigefügten Zeichnungen mit weiteren Einzelheiten näher erläutert. Dabei zeigen
- Fig. 1: eine schematische Schnittdarstellung einer Ausführungsform der Erfindung,
- Fig. 2: eine Prinzipdarstellung der elektrischen Verschaltung bzw. Ansteuerung der Messröhre.

Das Messröhrengehäuse MRG besteht aus einem Rohrflansch, welcher auf der der Messöffnung MOE (mit Verbindungsflansch zur Messstelle) gegenüberliegenden Öffnungverschlossen ist. Die geschlossene Seite des Rohrflansches enthält drei vakuumdichte, elektrisch sehr gut isolierte, mit einem Bedampfungsschutz BS versehene Durchführungen, eine konzentrische für die stabförmige Anode A und zwei exzentrische für die zweite Katode K2, deren für Entladungsstrom für Messzwecke benutzt wird. Anstelle einer der beiden Messdurchführungen für die zweite Katode K2 kann auch eine vom Gehäuse gut isolierte Stütze zur stabilen Halterung der Katode K2 angebracht werden. Die beiden Katoden K1 und K2 haben eine trommel- oder dosenähnliche Form, wobei ihre als Endkappen ausgebildete Stirnflächen im wesentlichen geschlossen sind. Die zweite Katode K2 sitzt in dem abgeschlossenen Teil des Messröhrengehäuses MRG und wird mittels geeigneter Klemmverbindungen, die wiederum von den Durchführungselektroden gehaltert werden, in ihrer Lage fixiert. Die beiden Stirnflächen der zweiten Katode K2 weisen jeweils eine Öffnung in Form einer konzentrischen Bohrung für den Durchtritt der stabförmigen Anode A auf.

Die näher zur Messöffnung MOE gelegene erste Katode K1 ist ebenfalls durch mit Bohrungen versehenen Endkappen verschlossen. Im Unterschied zur zweiten Katode K2 weist die erste Katode K1 jedoch nur in einer Stimfläche eine Bohrung für den Anodendurchtritt auf, während die andere Stimfläche mit mehreren Löchern versehen ist, um einen ungehinderten Gaseintritt in die Messröhre gewährleisten zu können. Die erste Katode K1 sitzt fest im zum Flansch zugewandten Teil des Messröhrengehäuses MRG und wird mit einem Sprengring SR gehaltert. Auf dem Außendurchmesser des Messröhrengehäuses sitzen ein oder mehrere ringförmige Hochleistungs-Permanentmagnete, dessen bzw. deren Feld die beiden Entladungskammern RK und MK axial durchsetzen.

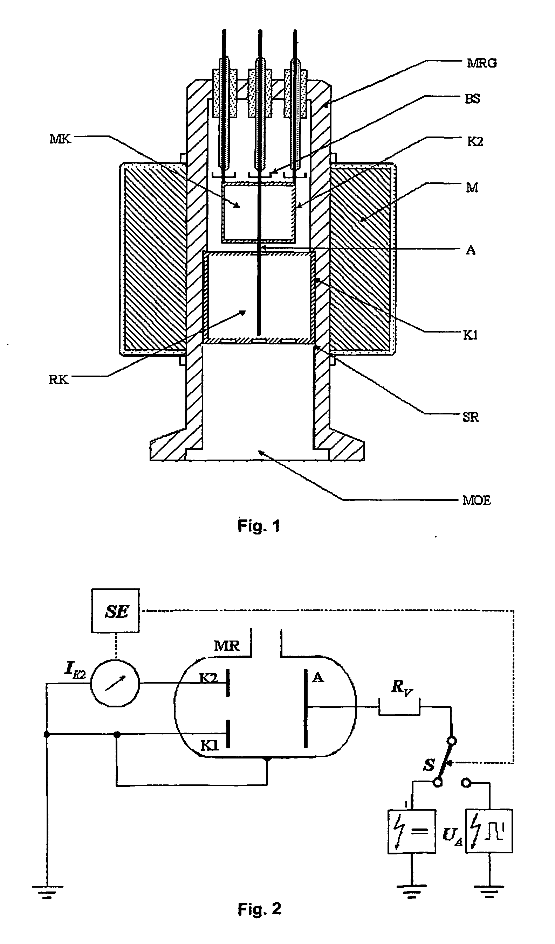

Das Prinzip der elektrischen Verschaltung bzw. die Ansteuerung der Messröhre wird anhand der Fig. 2 verdeutlicht: Die stabförmige Anode A der Messröhre MR erhält über einen elektronisch gesteuerten Umschalter S und einen Vorwiderstand *R*_{*v*}, der den Entladungsstrom *I*_{*k2*} begrenzen und die Entladungsstrom-Druck-Kennlinie im oberen Vakuumbereich stabilisierend beeinflussen soll, entweder die Hochspannung *U*_{*A*} von einem Gleichspannungs- oder von einem Wechselspannungsnetzgerät.

Je nach Druckverhältnissen wird entweder die Messröhre mit einer Gleichspannung oder einer rechteckförmigen Wechselspannung geeigneter Frequenz betrieben. Im Bereich kleiner Drücke ist die die Betriebsspannung eine konstante Gleichspannung, im Bereich höherer Vakuumdrücke wird die Entladung mit einer Wechselspannung aufrechterhalten. Die Umschaltung von der einen in die andere Betriebart erfolgt elektronisch, z. B. auf Grundlage der Auswertung der abfließenden Entladungsströme mittels einer Steuereinheit SE.

Um Kriechströme zwischen den beiden Katoden K1 und K2 gänzlich zu vermeiden, werden beide Katoden auf Erdpotenzial gehalten. Während die an der Messöffnung befindliche erste Katode K1 jedoch über das Messröhrengehäuse MRG direkt geerdet ist, wird die zweite Katode K2, welche die eigentliche Messkammer umgibt, über ein empfindliches Strommessgerät, welches den druckabhängigen Entladungsstrom *I*_{*K2*} anzeigt, geerdet. Der im unteren Vakuumbereich gemessene Gleich- bzw. der bei höheren Drücken registrierte Wechselstrom dient als Maß für den Druck und wird zur Anzeige gebracht.

## Patentansprüche

1. Kaltkatoden-Ionisationsmanometer zur Druckmessung im Vakuum, das nach dem inversen Magnetron-Prinzip arbeitet und folgende Merkmale aufweist:
■ ein Messröhrengehäuse (MRG) ist - mit Ausnahme einer Messöffnung (MOE) für die Einleitung von Messgas - vakuumdicht verschlossen und weist in seinem Innenraum mindestens eine erste Katode (K1) und eine zweite Katode (K2) sowie eine gemeinsame stabförmige Anode (A) auf, die an eine Anodenspannungsquelle anschließbar ist,
■ die Katoden (K1; K2) sind voneinander unabhängig sowie elektrisch getrennt, besitzen eine trommel- oder dosenähnliche Gestalt und sind koaxial zur Anode (A) angeordnet, die durch Öffnungen in den Stirnflächen der Katoden (K1; K2) verläuft, wobei die zweite Katode (K2) hinter der der Messöffnung (MOE) benachbarten ersten Katode (K1) positioniert ist und zwischen den Katoden (K1; K2) und der Anode (A) jeweils getrennte Gasentladungen brennen,
■ die mindestens eine Öffnung in mindestens einer der einander zugewandten Stimflächen der Katoden (K1; K2) ist so dimensioniert, dass sie einen vorgebbaren Strömungswiderstand für kontaminierende Gase bildet,
■ ausschließlich die zweite Katode (K2) steht in Wirkverbindung mit Mess- und Auswerteeinheiten, die den Gasdruck aus der Größe des Entladungsstroms (*I*_{*K2*}) bestimmen, der von der zwischen der zweiten Katode (K2) und der Anode (A) brennenden Gasentladung erzeugt wird, während die Entladungstrecke zwischen der ersten Katode (K1) und der Anode (A) als Gasreinigungsvorrichtung ausgebildet ist.

2. Kaltkatoden-lonisationsmanometer zur Druckmessung im Vakuum nach Anspruch 1, **dadurch gekennzeichnet, dass** mindestens die erste Katode (K1) leicht auszuwechselbar im Messröhrengehäuse (MRG) angeordnet ist.

3. Kaltkatoden-lonisationsmanometer zur Druckmessung im Vakuum nach Anspruch 1 oder 2, **dadurch gekennzeichnet, dass** die zweite Katode (K2) zur Weiterleitung des Messstromes mindestens eine vakuumdichte, hochisolierte Durchführung durch das Messröhrengehäuse (MRG) besitzt, wobei diese Durchführung einen Bedampfungsschutz (BS) aufweist.

4. Kaltkatoden-Ionisationsmanometer zur Druckmessung im Vakuum nach einem der vorhergehenden Ansprüche, **dadurch gekennzeichnet, dass** beide Katoden (K1; K2) mittels Klemmverbindungen leicht auszuwechselbar im Messröhrengehäuse (MRG) angeordnet sind.

5. Kaltkatoden-lonisationsmanometer zur Druckmessung im Vakuum nach einem der vorhergehenden Ansprüche, **dadurch gekennzeichnet, dass** die Anode (A) vakuumseitig mittels einer Schraubverbindung gehaltert ist.

6. Kaltkatoden-Ionisationsmanometer zur Druckmessung im Vakuum nach einem der vorhergehenden Ansprüche, **dadurch gekennzeichnet, dass** die Anodenspannung bei Drücken von mehr als ca. 10⁻² Pa eine sinus- oder rechteckförmige Wechselspannung ist, deren Frequenz entsprechend den geometrischen Parametern der Messröhre und den Betriebsparametern optimiert wird.

## Claims

1. Cold cathode ionization manometer for measuring pressure in a vacuum, operating on the inverse magnetron principle and comprising the following characteristics:
• a measuring tube housing (MRG) that is - except for a measuring opening (MOE) for the input of measuring gas - dosed in a vacuum tight manner and provided in its internal chamber at least with one first cathode (K1) and one second cathode (K2) as well as with a common rod-shaped anode (A) which may be connected to an anode voltage source,
• the cathodes (K1; K2) being independent of each other and electrically isolated from each other, made of drum-like or can-like shape and arranged coaxially with respect to the anode (A) which extends through openings in the front faces of cathodes (K1; K2), where the second cathode (K2) is located behind the first cathode (K1) positioned in close vicinity to the measuring opening (MOE), and where separate gas discharges are fulgurating between the cathodes (K1; K2) and the anode (A),
• at least one opening in at least one of the front faces of cathodes (K1; K2) facing each other and dimensioned so that a pre-set flow resistance for contaminated gases is formed,
• the second cathode (K2) is exdusively in effective connection with the measuring and evaluation units which determine the gas pressure on the basis of the magnitude of discharge current (*I*_{*k2*}) generated by the fulgurating gas discharge between the second cathode (K2) and the anode (A), while the discharge path between the first cathode (K1) and the anode (A) is designed as gas purification device.

2. Cold cathode ionization manometer for pressure measurement in the vacuum as claimed in claim 1, **characterized by** the fact that at least the first cathode (K1) is arranged in the measuring tube housing (MRG) so that it is easily replaceable.

3. Cold cathode ionization manometer for pressure measurement in the vacuum as claimed in claim 1 or 2, **characterized by** the fact that the second cathode (K2) is provided with at least one vacuum-tight highly insulated conduit through the measuring tube housing (MRG) where the conduit is provided with a vaporization protection device (BS).

4. Cold cathode ionization manometer for pressure measurement in a vacuum as claimed in any of the preceding claims, **characterized by** the fact that both cathodes (K1; K2) are installed inside the measuring tube housing (MRG) with clamp connectors so that replacement is easy.

5. Cold cathode ionization manometer for pressure measurement in the vacuum as claimed in any of the preceding claims, **characterized by** the fact that the vacuum side of the anode (A) is fixed by means of a screw connection.

6. Cold cathode ionization manometer for pressure measurement in the vacuum as claimed in any of the preceding claims, **characterized by** the fact that at pressures exceeding some 10⁻² Pa the anode voltage is a sinusoidal or rectangular alternating voltage the frequency of it is optimized in accordance with the geometric parameters of the measuring tube and the operating parameters.

## Revendications

1. Manomètre à ionisation à cathodes froides pour mesurer la pression dans le vide, fonctionnant selon le principe inverse de magnétron et ayant les attributs suivants:
■ une boîte à tube de mesurage (MRG) est fermée - à l'exception d'une ouverture de mesurage (MOE) pour y introduire le gaz à mesurer - étanche au vide, et dans son enceinte intérieure il y a au minimum une première cathode (K1) et une deuxième cathode (K2) ainsi qu'une anode commune en forme de barre (A), qui peut être reliée à une source de tension anodique,
■ les cathodes (K1; K2) sont indépendantes l'une de l'autre et séparées électriquement, ont la forme d'un tambour ou d'une boîte et se trouvent situées coaxiales envers l'anode (A), qui passe par des orifices dans les fronts des cathodes (K1; K2), où la deuxième cathode (K2) se trouve derrière la première cathode (K1), laquelle est voisine de l'ouverture de mesurage (MOE), et entre les cathodes (K1; K2) et l'anode (A) brûlent des décharges gazeuses séparément l'une de l'autre,
■ les orifices, au minimum une orifice dans au minimum un des fronts des cathodes tournés l'un vers l'autre, sont dimensionnées de manière qu'elles forment une résistance préréglable au courant de gaz contaminants,
■ seulement la deuxième cathode (K2) se trouve en relation active avec des unités de mesurage et de traitement qui déterminent la pression de gaz selon la valeur du courant de décharge (*I*_{*k2*}), produit par la décharge de gaz brûlant entre la deuxième cathode (K2) et l'anode (A), tandis que la voie de décharge entre la première cathode (K1) et l'anode (A) est conçue en dispositif de purification de gaz.

2. Manomètre à ionisation à cathodes froides, pour mesurer la pression dans le vide, selon la revendication 1, **caractérisé en ce que** au minimum la première cathode (K1) est placée facilement échangeable dans la boîte à tube de mesurage (MRG).

3. Manomètre à ionisation à cathodes froides, pour mesurer la pression dans le vide, selon les revendications 1 ou 2, **caractérisé en ce que** la deuxième cathode (K2) possède au minimum une traversée étanche au vide et hautement isolée à travers la boîte à tube de mesurage (MRG) pour conduire le courant de mesurage, et cette traversée est munie d'une protection de vaporisation (BS).

4. Manomètre à ionisation à cathodes froides, pour mesurer la pression dans le vide, selon une des revendications précédentes, **caractérisé en ce que** les deux cathodes (K1; K2) sont disposées dans la boîte à tube de mesurage (MRG) facilement échangeables moyennant des dispositifs de serrage.

5. Manomètre à ionisation à cathodes froides, pour mesurer la pression dans le vide, selon une des revendications précédentes, **caractérisé en ce que** l'anode (A) est fixée au côté du vide moyennant un raccord par vis.

6. Manomètre à ionisation à cathodes froides, pour mesurer la pression dans le vide, selon une des revendications précédentes, **caractérisé en ce que** la tension anodique, à des pressions de plus de 10⁻² Pa, présente une tension alternative de forme sinusoïdale ou rectangulaire dont la fréquence est à optimiser conformément aux paramètres géométriques du tube de mesurage et aux paramètres d'exploitation.
